# EUROPÄISCHE PATENTSCHRIFT

(11) **EP 2 379 644 B1**
(45) Veröffentlichungstag und Bekanntmachung des Hinweises auf die Patenterteilung: **22.08.2018**
(21) Anmeldenummer: 09765122.8
(22) Anmeldetag: 10.12.2009
(51) Int. Cl.: C08L 77/02, C08L 77/06, C08L 77/00, C08K 3/08, C08L 79/02

(54) **WÄRMEALTERUNGSBESTÄNDIGE POLYAMIDE**
HEAT AGING RESISTANT POLYAMIDES
POLYAMIDES RÉSISTANTS AU VIEILLISSEMENT THERMIQUE

(30) Priorität: 16.12.2008 EP 08171803
(43) Veröffentlichungstag der Anmeldung: 26.10.2011
(73) Patentinhaber: BASF SE, 67056 Ludwigshafen am Rhein (DE)
(72) Erfinder: PRUSTY, Manoranjan, 68161 Mannheim (DE); DESBOIS, Philippe, 68535 Edingen-Neckarhausen (DE); SCHEIBITZ, Matthias, 69469 Weinheim (DE); BAUMERT, Martin, 69221 Dossenheim (DE)
(74) Vertreter: BASF IP Association
(86) Internationale Anmeldenummer: PCT/EP2009/066807
(87) Internationale Veröffentlichungsnummer: WO 2010/076145

(56) Entgegenhaltungen:
- WO-A1-2008/110327
- GB-A- 1 290 383
- US-A1- 2006 155 034
- US-A1- 2008 146 718
- US-A1- 2008 262 133

## Beschreibung

Die Erfindung betrifft thermoplastische Formmassen enthaltend
A) 10 bis 99,94 Gew.-% eines Polyamides,
B) 0,05 bis 5 Gew.-% eines Polyethyleniminhomopolymerisates mit einem Verhältnis von primären, sekundären, tertiären Aminogruppen von 1 / 0,91 / 0,64 und einem mittleren Molekulargewicht M_{w} von 1300,
C) 0,01 bis 20 Gew.-% Eisenpulver,
D) 0 bis 70 Gew.-% weiterer Zusatzstoffe,
wobei die Summe der Gewichtsprozente A bis D 100 % ergibt

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Thermoplastische Polyamide wie PA6 und PA66 werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert nicht aber dauerhaft verhindert werden, was sich z.B. in einem Abfallen der mechanischen Kennwerte äußert. Die Verbesserung der Wärmealterungsbeständigkeit (WAB) von Polyamiden ist überaus wünschenswert, da dadurch längere Lebenszeiten für thermisch belastete Bauteile erreicht werden können, bzw. deren Ausfallrisiko gesenkt werden kann. Alternativ kann eine verbesserte WAB auch den Einsatz der Bauteile bei höheren Temperaturen ermöglichen.

Aus dem Kunststoff Handbuch 3. Technische Thermoplaste, 4. Polyamide, 1998 Carl Hanser Verlag München Wien, Herausgeber L. Bottenbruch, R. Binsack ist die Verwendung von verschiedenen Wärmestabilisatoren bei Polyamiden bekannt. Der Einsatz von hyperverzweigten Polyethyleniminen in thermoplastischen Polymeren ist z.B. aus DE 10030553 und DE 102005005847 bekannt.

Aus EP 1065236 sind unverstärkte Polyamide bekannt, bei denen Polyethylenimine und Oligocarbonsäuren während der Polymerisation eingesetzt werden. Die beschriebenen Formmassen weisen eine verbesserte Lösemittelbeständigkeit auf, die WAB ist jedoch verbesserungswürdig.

Der Einsatz von elementarem Eisenpulver in Polyamiden ist aus den WO 2006/074912 und WO 2005/007727 bekannt.

Die Wärmealterungsbeständigkeit ist in den bekannten Formmassen, insbesondere über längere thermische Belastungszeiträume, immer noch unzureichend.

Der vorliegenden Erfindung lag daher die Aufgabe zugrunde, thermoplastische Polyamidformmassen zur Verfügung zu stellen, welche eine verbesserte WAB und eine gute Fließfähigkeit sowie Mechanik aufweisen.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 99,94, vorzugsweise 20 bis 95 und insbesondere 20 bis 80 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

| AB-Polymere: | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

| AA/BB-Polymere | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA MXD6 | m-Xylylendiamin, Adipinsäure |
| AA/BB-Polymere | |
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyt-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Die thermoplastischen Formmassen enthalten als Komponente B) erfindungsgemäß 0,05 bis 5 Gew.-% eines Polyethyleniminhomopolymerisates mit einem Verhältnis von primären, sekundären, tertiären Aminogruppen von 1 / 0,91 / 0,64 und einem mittleren Molekulargewicht M_{w} von 1300. Bevorzugt beträgt der Anteil von B) 0,1 bis 3 Gew.-% und insbesondere 0,1 bis 1 Gew.-% bezogen auf A) bis D).

Unter Polyethyleniminen im Sinne der vorliegenden Erfindung sollen Homopolymerisate verstanden werden, welche beispielsweise nach den Verfahren in Ullmann Electronic Release unter dem Stichwort "Aziridine" oder gemäß WO-A 94/12560 erhältlich sind.

Die Homopolymerisate sind im Allgemeinen durch Polymerisation von Ethylenimin (Aziridin) in wässriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen enthalten. Die Verteilung der Aminogruppen kann im Allgemeinen mittels ¹³C-NMR Spektroskopie bestimmt werden.

Das mittlere Molekulargewicht (Gewichtsmittel) wird bestimmt mittels Lichtstreuung.

Als Komponente C) enthalten die erfindungsgemäßen Formmassen 0,01 bis 20, vorzugsweise 0,05 bis 10 und insbesondere 0,1 bis 5 Gew.-% Eisenpulver.

Eisen kommt in mehreren allotropen Modifikationen vor:
1. α-Fe (Ferrit) bildet raumzentrierte Würfelgitter, ist magnetisierbar, löst wenig Kohlenstoff, kommt in reinem Eisen bis 928°C vor. Bei 770°C (Curie-Temperatur) verliert es seine ferromagnetischen Eigenschaften und wird paramagnetisch; Eisen im Temperaturbereich von 770 bis 928°C wird auch als β-Fe bezeichnet. Bei gewöhnlicher Temperatur und einem Druck von mindestens 13000 MPa geht α-Fe in sog. ε-Fe unter einer Vol.-Verminderung von ca. 0,20 cm³/mol über, wobei sich die Dichte von 7,85 auf 9,1 (bei 20000 MPa) erhöht.
2. γ-Fe (vgl. Austenit) bildet flächenzentrierte Würfelgitter, ist unmagnetisch, löst viel Kohlenstoff und ist nur im Temperaturbereich von 928 bis 1398°C zu beobachten.
3. δ-Fe, raumzentriert, existiert zwischen 1398°C und dem Schmelzpunkt 1539°C.

Metallisches Eisen ist allgemein silberweiß, Dichte 7,874 (Schwermetall), Schmelzpunkt 1539°C, Siedepunkt 2880°C; spezif. Wärme (zwischen 18 und 100°C) etwa 0,5 g⁻¹ K, Zugfestigkeit 220 bis 280 N/mm². Die Werte gelten für das chemisch reine Eisen.

Eisen wird durch Reduktion von Eisenoxid mit Wasserstoff bei niedriger Temperatur als chemisch reines Pulver, durch therm. Zersetzung von Eisenpentacarbonyl gemäß Fe(CO)₅ → Fe + 5CO bei 150 bis 250°C als sehr reines Pulver - Carbonyleisen - oder durch Elektrolyse von Eisen(II)-chlorid-Lösung oder Eisen(II)-sulfat-Lösung mit unlöslichem Graphit oder löslicher Anode aus Eisenblech oder Gusseisen erhalten. Durch Abscheidung aus schwefelsaurer Eisen(II)-sulfat-Lösung an Quecksilber-Kathoden und anschließende Raffination lässt sich 99,99 %iges Eisen gewinnen. Großtechnisch wird Eisen durch Verhüttung von Eisenerzen, Eisenschlacken, Kiesabbränden, Gichtstaub und durch Umschmelzen von Schrott und Legierungen hergestellt.

Bevorzugtes Eisenpulver C) weist eine mittlere Teilchengröße d₅₀ von maximal 450 µm, insbesondere 20 bis 250, ganz besonders bevorzugt von 30 bis 100 µm auf (gemäß ASTM D 1921-89, Methode A).

Derartige Produkte sind z.B. als SCM IronPowder A 131 von SCM Metal Products erhältlich.

Um eine besonders gute Verteilung der Eisenpartikel zu erzielen, kann man einen Batch mit einem Polymeren einsetzen. Polymere wie Polyolefine, Polyester oder Polyamide sind hierfür geeignet, wobei vorzugsweise das Batchpolymer gleich der Komponente A) ist. Der Masseanteil des Eisens im Polymeren beträgt in der Regel 15 bis 40, vorzugsweise 20 bis 30 Masse-%.

Geeignete Batchzusammensetzungen sind im Handel beispielsweise als Shelfplus 02 2400 der Ciba Spezialitätenchemie GmbH erhältlich (20 %iger Batch mit Polyethylen, d₅₀ = 30 µm).

Als Komponente D) können die erfindungsgemäßen Formmassen bis zu 70, vorzugsweise bis zu 50 Gew.-% weiterer Zusatzstoffe enthalten.

Als faser- oder teilchenförmige Füllstoffe D1) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 1 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CmH₂ₘ₊₁)₄₋ₖ

in der die Substituenten folgende Bedeutung haben:
- X: NH₂-,

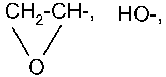

- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf E)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente D2) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente D3) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4., oder eines sterisch gehinderten Phenols oder deren Mischungen enthalten.

Als Salze des einwertigen Kupfers kommen vorzugsweise Kupfer(I)-Acetat, Kupfer(I)-Chlorid, -Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole D3) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 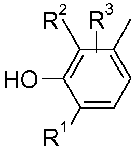 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 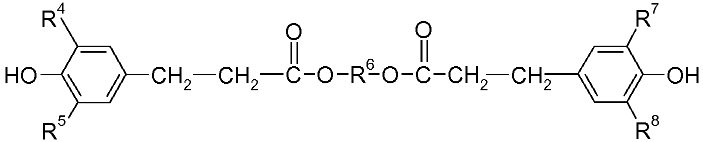 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die diesen Formeln entsprechen, sind 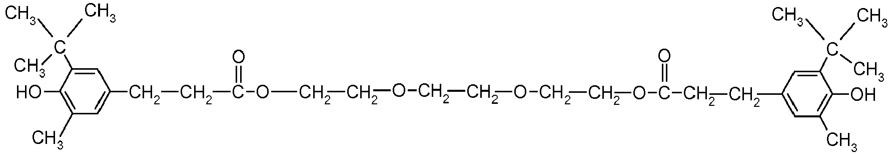 (Irganox® 245 der Firma Ciba-Geigy 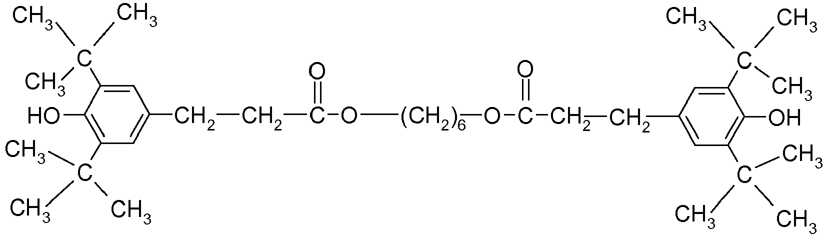 (Irganox® 259 der Firma Ciba-Geigy)

### Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin.

Als besonders wirksam erwiesen haben sich und daher vorzugsweise verwendet werden 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma Ciba Geigy, das besonders gut geeignet ist.

Die Antioxidantien D), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis D) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente D4) können die erfindungsgemäßen Formmassen 0,05 bis 5, vorzugsweise 0,1 bis 2 und insbesondere 0,25 bis 1 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und FeCl₃ (Name von lateinischem niger = schwarz).

Die Komponente D4) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Weitere übliche Zusatzstoffe D) sind beispielsweise in Mengen bis zu 25, vorzugsweise bis zu 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

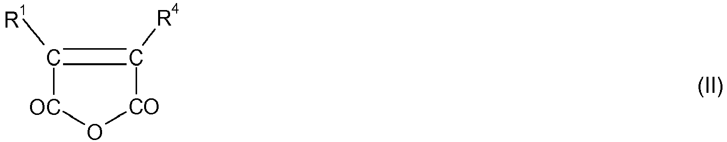

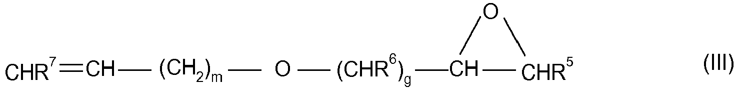

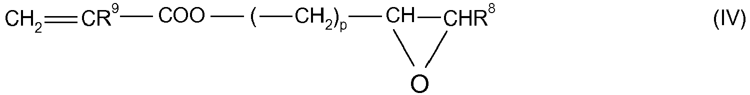

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säure-anhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 5 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 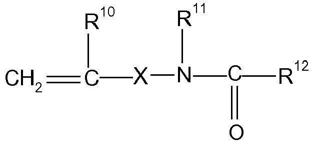 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 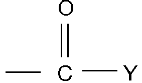
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente D) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis C) sowie gegebenenfalls D) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Verarbeitbarkeit bei gleichzeitig guter Mechanik, sowie eine deutlich verbesserte Bindenahtfestigkeit und thermische Stabilität aus.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Kabelbaumkomponenten, Schaltungsträger, Schaltungsträgerkomponenten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich.

### Beispiele

Es wurden folgende Komponenten eingesetzt:

### Komponente A/1

Polyamid 6 (Polycaprolactam) mit einer Viskositätszahl VZ von 148 ml/g, gemessen als 0,5 gew.-%ige Lösung in 96 gew.-%iger Schwefelsäure bei 25°C nach ISO 307. (Es wurde Ultramid® A27der BASF SE verwendet).

### Komponente A/2

PA 6/66 (80:20) mit einer VZ von 176 ml/g (Ultramid® C31-01)

### Komponente B) Polyethylenimin

| Lupasol® | G20 |
|---|---|
| M_{W} | 1 300 |
| Prim/sek/tert Amine | 1/0,91/0,64 |

Lupasol® ≙ eingetragene Marke der BASF SE

Das Verhältnis primär/sekundär/tertiäre Amine wurde mittels ¹³C-NMR-Spektroskopie bestimmt.

### Komponente C)

Shelfplus 02 2400 der Ciba Spezialitätenchemie GmbH (20 %iges Fe-Pulver-Batch in Polyethylen, d₅₀ = 30 µm).

### Komponente D/1

Glasfasern

### Komponente D/2

Calciummontanat

### Komponente D/3

CuJ/KJ im Verhältnis 1:4 (20 %iger Batch in PA 6)

### Komponente D/4

40 %iger PA6 Masterbatch mit Nigrosin

### Komponente D/5

Ethylen-Propylen-Copolymer mit 0,75 Gew.-% gepfropft mit MSA
(MFR: (2,16 kg/230°C) 3 g/10 Min ASTM D 1238

Die Formmassen wurden auf einer ZSK 30 bei einem Durchsatz von 10 kg/h und ca. 260°C flachem Temperaturprofil hergestellt.

Es wurden folgende Messungen durchgeführt:
Zugversuch nach ISO 527, Mechanikkennwerte vor und nach Wärmelagerung bei 160 bis 210°C im Umluftofen
VZ: c = 5 g/l in 96 %iger Schwefelsäure, nach ISO 307
MVR: 275°C, 5 kg, 4 min, nach ISO 1133
Fließspirale: 280°C/70°C, 1000 bar, 2 mm.

Die Schlagzähigkeit aₖ (ungekerbt) wurde bei 23°C gemäß ISO 179-2/1 eU bestimmt.

Die Zusammensetzungen der Formmassen und die Ergebnisse der Messungen sind den Tabellen 1 bis 4 zu entnehmen.

**Tabelle 1**

| Bsp. | A/1 [Gew.-%] | A/2 | B | C | D/1 | D/2 | D/3 | D/4 | D/5 | VZ [ml/g] | MVR [ml/10'] |
|---|---|---|---|---|---|---|---|---|---|---|---|
| 1 | 43.9 | 20.0 | 0.5 | 2.0 | 30 | 0.2 | 1.5 | 1.9 | - | 123 | 52.8 |
| 2 | 40.9 | 20.0 | 0.5 | 5.0 | 30 | 0.2 | 1.5 | 1.9 | - | 136 | 53.9 |
| 3 | 39.2 | 20.0 | 0.5 | 5.0 | 30 | 0.2 | 1.5 | 1.9 | 1.7 | 129 | 51.9 |
| 1V | 46.4 | 20.0 | - | - | 30 | 0.2 | 1.5 | 1.9 | - | 194 | 13.3 |
| 2V | 41.4 | 20.0 | - | 5.0 | 30 | 0.2 | 1.5 | 1.9 | - | 164 | 18.6 |
| 3V | 39.7 | 20.0 | - | 5.0 | 30 | 0.2 | 1.5 | 1.9 | 1.7 | 155 | 19.7 |
| 4V | 45.9 | 20.0 | 0.5 | - | 30 | 0.2 | 1.5 | 1.9 | - | 149 | 40.9 |

**Tabelle 2**

| Mechanische Eigenschaften nach Wärmelagerung bei 160°C | | |
|---|---|---|
| Beispiel | aₖ [kJ/m²] | |
| | 0 h | 1000 h |
| 1 | 80 | 51 |
| 2 | 75 | 45.7 |
| 3 | 89 | 55.7 |
| 1V | 92 | 33.4 |
| 2V | 92 | 39.4 |
| 3V | 92 | 46.6 |
| 4V | 77 | 48 |

**Tabelle 3**

| Mechanik nach Wärmelagerung bei 200°C | | | | | | | | | | | | | | | | |
|---|---|---|---|---|---|---|---|---|---|---|---|---|---|---|---|---|
| Bsp | E-modul | | | | Streckspannung | | | | Reißdehnung | | | | aₖ | | | |
| | [MPa] | | | | [MPa] | | | | [%] | | | | [kJ/m²] | | | |
| | 0 h | 250 h | 500 h | 1000 h | 0 h | 250 h | 500 h | 1000 h | 0 h | 250 h | 500 h | 1000 h | 0 h | 250 h | 500 h | 1000 h |
| 1 | 10148 | 10614 | 10881 | 10832 | 190 | 200 | 199 | 187 | 3.1 | 2.8 | 2.9 | 2.8 | 80 | - | 43.1 | 37.4 |
| 2 | 10051 | 10581 | 10602 | 10808 | 184 | 198 | 192 | 187 | 3.0 | 3.0 | 2.8 | 2.6 | 75 | - | 46.6 | 40.3 |
| 3 | 9552 | 10160 | 10005 | 10408 | 172 | 189 | 183 | 182 | 3.2 | 3.4 | 3.0 | 3.0 | 89 | - | 64.2 | 46.0 |
| 1V | 9913 | 10669 | 10775 | 10784 | 179 | 166 | 154 | 151 | 3.5 | 2.1 | 1.8 | 1.8 | 92 | - | 26.6 | 27.1 |
| 2V | 10028 | 10599 | 10782 | 10826 | 177 | 195 | 188 | 179 | 3.2 | 3.1 | 2.8 | 2.6 | 92 | - | 49.9 | 32.2 |
| 3V | 9704 | 10379 | 10300 | 10506 | 169 | 185 | 181 | 179 | 3.2 | 3.3 | 3.2 | 3.0 | 92 | - | 70.8 | 39.8 |
| 4V | 9922 | 10613 | 10279 | 10700 | 188 | 183 | 177 | 178 | 3.2 | 2.4 | 2.2 | 2.3 | 77 | - | 37.7 | 37.3 |

**Tabelle 4**

| Mechanik nach Wärmelagerung bei 210°C | | | | | | | | | | | | |
|---|---|---|---|---|---|---|---|---|---|---|---|---|
| Bsp | E-modul | | | | Streckspannung | | | | Reißdehnung | | | |
| | [MPa] | | | | [MPa] | | | | [%] | | | |
| | 0 h | 250 h | 500 h | 1000 h | 0 h | 250 h | 500 h | 1000 h | 0 h | 250 h | 500 h | 1000 h |
| 1 | 10148 | 10699 | 10905 | 10921 | 190 | 200 | 190 | 180 | 3.1 | 2.8 | 2.5 | 2.9 |
| 2 | 10051 | 10651 | 10592 | 11066 | 184 | 192 | 178 | 157 | 3.0 | 2.8 | 2.4 | 1.9 |
| 3 | 9552 | 10428 | 10425 | 10494 | 172 | 187 | 176 | 164 | 3.2 | 3.2 | 2.6 | 2.2 |
| 1V | 9913 | 10787 | 10823 | 10667 | 179 | 165 | 166 | 134 | 3.5 | 2.0 | 2.1 | 1.5 |
| 2V | 10028 | 10868 | 10648 | 10871 | 177 | 191 | 176 | 144 | 3.2 | 3.0 | 2.4 | 1.6 |
| 3V | 9704 | 10521 | 10121 | 10709 | 169 | 183 | 172 | 152 | 3.2 | 3.2 | 2.6 | 1.9 |
| 4V | 9922 | 10549 | 10705 | 10709 | 188 | 188 | 191 | 166 | 3.2 | 2.5 | 2.6 | 2.0 |

## Patentansprüche

1. Thermoplastische Formmassen enthaltend
A) 10 bis 99,94 Gew.-% eines Polyamides,
B) 0,05 bis 5 Gew.-% eines Polyethyleniminhomopolymerisates mit einem Verhältnis von primären, sekundären, tertiären Aminogruppen von 1 / 0,91 / 0,64 und einem mittleren Molekulargewicht M_{w} von 1300,
C) 0,01 bis 20 Gew.-% Eisenpulver,
D) 0 bis 70 Gew.-% weiterer Zusatzstoffe,
wobei die Summe der Gewichtsprozente A bis D 100 Gew.-% ergibt.

2. Thermoplastische Formmassen nach Anspruch 1, enthaltend als Komponente D1) 1 bis 45 Gew.-% eines faserförmigen oder teilchenförmigen Zusatzstoffes.

3. Thermoplastische Formmassen nach den Ansprüchen 1 oder 2, enthaltend als Komponente D2) 0,05 bis 3 Gew.-% eines Schmiermittels.

4. Thermoplastische Formmassen nach den Ansprüchen 1 bis 3, enthaltend als Komponente D3) 0,05 bis 3 Gew.-% eines kupferhaltigen Stabilisators oder eines sterisch gehinderten Phenols oder deren Mischungen.

5. Thermoplastische Formmassen nach den Ansprüchen 1 bis 4, enthaltend als Komponente D4) 0,05 bis 10 Gew.-% eines Nigrosins.

6. Thermoplastische Formmassen nach den Ansprüchen 1 bis 5, in denen die Komponente A) aus einem Polyamid 66 oder einer Mischung aus Polyamid 66 mit einem anderen Polyamid aufgebaut ist.

7. Thermoplastische Formmassen nach den Ansprüchen 1 bis 6, wobei die mittlere Teilchengröße d₅₀ der Komponente C) maximal 450 µm beträgt (gemäß ASTM D 1921-89, Methode A).

8. Verwendung der thermoplastischen Formmassen gemäß den Ansprüchen 1 bis 7 zur Herstellung von Fasern, Folien und Formkörpern jeglicher Art.

9. Fasern, Folien und Formkörper jeglicher Art erhältlich aus den thermoplastischen Formmassen gemäß den Ansprüchen 1 bis 7.

## Claims

1. A thermoplastic molding composition, comprising
A) from 10 to 99.94% by weight of a polyamide,
B) from 0.05 to 5% by weight of a polyethyleneimine homopolymer having a ratio of primary, secondary, tertiary amino groups of 1/0.91/0.64 and an average molecular weight M_{W} of 1300,
C) from 0.01 to 20% by weight of iron powder, and
D) from 0 to 70% by weight of further additives,
where the total of the percentages by weight of A) to D) is 100% by weight.

2. The thermoplastic molding composition according to claim 1, comprising, as component D1), from 1 to 45% by weight of a fibrous or particulate additive.

3. The thermoplastic molding composition according to claim 1 or 2, comprising, as component D2), from 0.05 to 3% by weight of a lubricant.

4. The thermoplastic molding composition according to claims 1 to 3, comprising, as component D3), from 0.05 to 3% by weight of a copper-containing stabilizer or of a sterically hindered phenol, or a mixture of these.

5. The thermoplastic molding composition according to claims 1 to 4, comprising, as component D4), from 0.05 to 10% by weight of a nigrosin.

6. The thermoplastic molding composition according to claims 1 to 5, in which component A) is composed of a nylon-6,6 or a mixture composed of nylon-6,6 with another polyamide.

7. The thermoplastic molding composition according to claims 1 to 6, where the average particle size d₅₀ of component C) is at most 450 µm (according to ASTM D 1921-89, method A).

8. The use of the thermoplastic molding compositions according to claims 1 to 7 for the production of fibers, of foils, and of moldings of any type.

9. A fiber, a foil, or a molding of any type obtainable from the thermoplastic molding compositions according to claims 1 to 7.

## Revendications

1. Matériaux de moulage thermoplastiques, contenant :
A) 10 à 99,94 % en poids d'un polyamide,
B) 0,05 à 5 % en poids d'un homopolymère de polyéthylène-imine ayant un rapport entre les groupes amino primaires, secondaires, tertiaires de 1/0,91/0,64 et un poids moléculaire moyen M_{w} de 1 300,
C) 0,01 à 20 % en poids d'une poudre de fer,
D) 0 à 70 % en poids d'autres additifs,
la somme des pourcentages en poids de A à D étant de 100 % en poids.

2. Matériaux de moulage thermoplastiques selon la revendication 1, contenant en tant que composant D1) 1 à 45 % en poids d'un additif fibreux ou particulaire.

3. Matériaux de moulage thermoplastiques selon la revendication 1 ou 2, contenant en tant que composant D2) 0,05 à 3 % en poids d'un lubrifiant.

4. Matériaux de moulage thermoplastiques selon les revendications 1 à 3, contenant en tant que composant D3) 0,05 à 3 % en poids d'un stabilisateur contenant du cuivre ou d'un phénol à encombrement stérique ou leurs mélanges.

5. Matériaux de moulage thermoplastiques selon les revendications 1 à 4, contenant en tant que composant D4) 0,05 à 10 % en poids d'une nigrosine.

6. Matériaux de moulage thermoplastiques selon les revendications 1 à 5, dans lesquels le composant A) est formé par un polyamide 66 ou un mélange de polyamide 66 avec un autre polyamide.

7. Matériaux de moulage thermoplastiques selon les revendications 1 à 6, dans lesquels la taille de particule moyenne d₅₀ du composant C) est d'au plus 450 µm (selon ASTM D 1921-89, méthode A).

8. Utilisation des matériaux de moulage thermoplastiques selon les revendications 1 à 7 pour la fabrication de fibres, de films et de corps moulés de tout type.

9. Fibres, films et corps moulés de tout type pouvant être obtenus à partir des matériaux de moulage thermoplastique selon les revendications 1 à 7.
